# EUROPEAN PATENT SPECIFICATION

(11) **EP 3 747 745 B1**
(45) Date of publication and mention of the grant of the patent: **04.01.2023**
(21) Application number: 19178644.1
(22) Date of filing: 06.06.2019
(51) Int. Cl.: B62D 35/02, B62D 25/08, B62D 29/00, B62D 43/10

(54) **RECEIVING DEVICE FOR A LUGGAGE COMPARTMENT FLOOR OF A VEHICLE, METHOD FOR MANUFACTURING SUCH A DEVICE AND VEHICLE LUGGAGE COMPARTMENT FLOOR**
AUFNAHMEVORRICHTUNG FÜR EINEN KOFFERRAUMBODEN EINES FAHRZEUGS, VERFAHREN ZUR HERSTELLUNG EINER SOLCHEN VORRICHTUNG UND FAHRZEUGKOFFERRAUMBODEN
DISPOSITIF DE RÉCEPTION DE PLANCHER D'UN COMPARTIMENT À BAGAGES D'UN VÉHICULE, PROCÉDÉ DE FABRICATION D'UN TEL DISPOSITIF ET PLANCHER DE COMPARTIMENT À BAGAGES D'UN VÉHICULE

(43) Date of publication of application: 09.12.2020
(73) Proprietor: Ford Global Technologies, LLC, Dearborn, MI 48126 (US)
(72) Inventor: Hellriegel, Matthias, 45473 Mülheim an der Ruhr (DE); Jacobi, Olaf, 42781 Haan (DE); Merino, Angela, 40213 Düsseldorf (DE); Demirci, Oguzhan, Körfez/Kocaeli (TR); Gerhardt, Ludwig, 50389 Wesseling (DE)
(74) Representative: Dörfler, Thomas

(56) References cited:
- EP-A1- 3 401 193
- WO-A1-2019/003528
- DE-A1-102015 012 528
- DE-U1-202004 011 483
- DE-U1-202014 002 557
- JP-A- 2006 213 258
- JP-A- 2013 023 025
- US-A1- 2011 227 367
- US-A1- 2012 034 833

## Description

The invention relates to a receiving device for a luggage compartment floor of a vehicle, comprising at least one receiving tray formed to be insertable in an insertion opening provided in the compartment floor, such that a bottom wall of the receiving tray forms a part of a vehicle underfloor. Further, the invention relates to a vehicle luggage compartment floor with at least one compartment floor element. Furthermore, the invention relates to a method for manufacturing a receiving device for a luggage compartment floor of a vehicle.

A development of an underbody of a vehicle is often a challenge due to many design restrictions and a lack of space stemming from complex interior and exterior dimensions. Interior space and rear luggage compartment space are key customer requirements that are particularly hard to meet in small cars. Existing implementations are limited by usual manufacturing feasibility, for example accompanying stamping of rear floor panels, and by packages of underbody components, such as an exhaust system.

Document DE 20 2014 002557 U1 discloses a receiving device for a luggage compartment floor according to the preamble of claim 1.

It is an object of the invention to provide a vehicle luggage compartment floor comprising enhanced receiving characteristics.

According to the invention this object is solved by a receiving device with the features according to claim 1.

It is pointed out that individual features and measures specified in the following description can be combined with each other in arbitrary technical reasonable way and can disclose further embodiments of the invention, as long as they fall under the scope of the claims. The description characterizes and specifies the invention additionally in particular together with the figures. The invention however is solely defined by the appended claims.

According to the invention additional space for receiving objects is provided to the vehicle luggage compartment floor by inserting the receiving tray in the insertion opening of the compartment floor. This additional space, for example up to additional 60 L, is gained under the loading surface of the luggage compartment floor and may be big enough to accommodate a spare wheel partly or completely in the receiving tray, to accommodate a battery, in particular a traction battery, and a luggage suitcase, in particular an airplane luggage-size bag, in the receiving tray, and to accommodate a LPG tank partly or completely in the receiving tray. Through this, the receiving device can be used as a multifunction receiving device for different purposes in different types of vehicles leading to a reduction of manufacturing costs. Since the bottom wall of the receiving tray forms a part of a vehicle underfloor, available space inside the receiving tray is maximized.

The described inventive multifunction receiving device and particularly the specific geometries required for such a multifunction receiving device could not be achieved by processing steel plates or the like. Instead, since the inventive receiving tray is manufactured from a compression moldable long fiber reinforced thermoplastic material, the receiving tray is compatible with a spare wheel geometry and a spare wheel fixation, with a battery geometry, in particular with its placement in the receiving tray and with attachments of the battery, and with a LPG tank geometry and a LPG tank fixation. Moreover, the receiving tray may be compatible with heat shield attachments, evaporator-line attachments and bumper fascia fixations. The parallel existence of these compatibilities cannot be achieved by processing a steel plate or the like.

Because the inventive receiving tray is manufactured from a long fiber reinforced thermoplastic material it has a very weight efficient design leading to a weight-save, for example about three kg (3kg) , compared to a receiving tray of the same size made of mild steel, plus more than one extra kg (1kg) save on additional part deletion. Since the inventive receiving tray is made from a long fiber reinforced thermoplastic material the receiving tray is very rugged and durable.

The long fiber reinforced thermoplastic material may comprise a thermoplastic matrix component that can be polypropylene, and a long fiber component that can be made from glass fibers or the like. The long fiber component may constitute about 30 % of the long fiber reinforced thermoplastic material. The long fiber reinforced thermoplastic material can be used in a direct long fiber thermoplastic molding method, in particular a compression molding method, to manufacture the receiving tray.

Additionally, the inventive receiving device may comprise a battery cover that may cover a part of the receiving tray accommodating the battery. The battery cover may be manufactured from a composite material. The battery cover may provide an appropriate battery protection against rear impacts. The battery cover may comprise water-splash prevention features. Such a receiving device can meet load requirements despite a very limited package/space due to a vertical positioning of the battery. Additionally, such a receiving device may comprise a battery heat-management function enabling a ventilation.

The inventive receiving device is suitable to be incorporated in any type of vehicle, especially in a hybrid electric vehicle, a mild hybrid electric vehicle, all gas-powered vehicles, such as for example a LPG vehicle or a petrol or diesel vehicle. The inventive receiving device may have a lid for partly or completely covering the receiving tray from above.

According to an advantageous embodiment at least one reinforcing insert is at least partly embedded in the receiving tray, wherein the reinforcing insert comprises at least one fiber mat. The fiber mat may be a glass fiber mat or the like. With the reinforcing insert the receiving tray is locally reinforced. Through this, the receiving tray can withstand higher mechanical loads which may occur during a crash scenario.

According to a further advantageous embodiment the reinforcing insert is at least partly arranged at a side wall of the receiving tray, wherein the receiving tray is formed to be insertable in the insertion opening in such a way that the side wall of the receiving tray is arranged next to a fuel containing component of the vehicle when the receiving tray is inserted in the insertion opening. By this the side wall of the receiving tray arranged next to the fuel containing vehicle component is prevented from being broken, cracked and/or split during a crash. This can prevent that a part of a fuel system, for example a fuel tank, is damaged during a crash by contacting a chip of a broken, cracked and/or split receiving tray. Thereby, safety requirements can be satisfied, and fuel system integrity can be ensured.

According to a further advantageous embodiment at least one reinforcing metal insert is at least partly embedded in or arranged at the receiving tray, wherein the metal insert is formed to fix a spare wheel accommodated at least partly inside the receiving tray to a body structure of the vehicle. The reinforcing metal insert connects the spare wheel to the vehicle body, and keeps it also connected during a crash event. The reinforcing metal insert may be manufactured from mild steel.

According to a further advantageous embodiment the bottom wall of the receiving tray is at least partly provided with a honeycomb structure. The honeycomb structure may be provided on a lower side of the bottom wall of the receiving tray or may be embedded in the bottom wall. The honeycomb structure reinforces the receiving tray an can provide a weight reduction. Moreover, the honeycomb structure enhances the NVH characteristic and the thermal radiation performance of the receiving tray. According to a further advantageous embodiment a lower side of the bottom wall of the receiving tray is at least partly provided with a vehicle aerodynamic enhancing structure. Through this, separate vehicle aerodynamic enhancing elements can be omitted.

According to the invention, the receiving device comprises at least one fixing unit for fixing a further vehicle component to the receiving tray, wherein the fixing unit is detachably arranged at an outer face of a side wall of the receiving tray.

Since the fixing unit is not an integral part of the receiving tray the receiving tray can be handled and stored more simply on the receiving tray manufacturer side. The fixing unit can be fixed to the receiving tray later, for example by dropping single receiving trays from above and then fixing at least one fixing unit to the respective receiving tray. The fixing unit may be fixed to the receiving tray after the receiving tray is inserted in the insertion opening of the compartment floor. The fixing unit may be provided for fixing an evaporator-line, a heat shield or a bumper fascia to the receiving tray. The receiving device can have two or more fixing units of the same or different kind.

According to a further advantageous embodiment at least one drain hole is formed in the bottom wall of the receiving tray. Thereby cleaning needs can be satisfied. The receiving tray may be rinsed or hosed to clean the receiving tray. A cleaning fluid used in this way for cleaning the receiving tray can drain off through the drain hole, especially by force of gravity. The bottom wall of the receiving tray may comprise two or more drain holes.

According to a further advantageous embodiment the receiving device comprises at least one closure unit for closing the drain hole, wherein the closure unit is removably arranged at the bottom wall of the receiving tray. The drain hole can be closed with the closure unit when the vehicle is driving or parking to prevent intrusion of water and/or mud into the receiving tray. For example, the drain hole may be opened by manually or tool-assisted removing the closure only when a person wants to clean the receiving tray.

According to a further advantageous embodiment the closure unit is a drainage valve operable from the inside of the receiving tray. The drainage valve may have an operating recess for receiving a tool part or a coin or the like to operate the drain valve.

According to a further advantageous embodiment the receiving tray contains a flame retardant. Through this, fire in case of an accident can be prevented or limited, thereby providing more safety.

According to a further advantageous embodiment the bottom wall of the receiving tray is at least partly inclined with respect to an upper access opening of the receiving tray, wherein a rear side wall of the receiving tray has a smaller height than a front side wall of the receiving tray. Through this, the receiving tray bottom wall can have an aerodynamic enhancing feature. The angle of inclination may range from about 4° to about 6°. A front end of the bottom wall may be rounded, for example with a radius about 50 mm.

The above object is further solved by a vehicle luggage compartment floor according to claim 13, comprising at least one receiving device according to one of the preceding embodiments or a combination of at least two of these embodiments with each other, wherein the compartment floor element comprises at least one insertion opening, and wherein the receiving device is inserted in the insertion opening. Advantages mentioned above with respect to the receiving device are correspondingly apply to the vehicle luggage compartment floor. The floor element may be a vehicle body element. The lower surface of the bottom wall of the receiving tray may be aligned with a twist-beam height level of the vehicle.

According to an advantageous embodiment the receiving device is glued to the compartment floor. This allows a simple and weight-saving fixation of the receiving device to the compartment floor element.

The above object is further solved by a method according to claim 14.

Advantages mentioned above with respect to the receiving device are correspondingly apply to the method. In particular, the receiving device according to one of the above-mentioned embodiments or a combination of at least two of these embodiments with each other may be manufactured by using the method.

According to an advantageous embodiment at least one reinforcing insert comprising at least one fiber mat is at least partly embedded in the receiving tray. Advantages mentioned above with respect to the corresponding embodiment of the receiving device are correspondingly apply to this method embodiment.

According to a further advantageous embodiment at least one reinforcing metal insert is at least partly embedded in or arranged at the receiving tray. Advantages mentioned above with respect to the corresponding embodiment of the receiving device are correspondingly apply to this method embodiment.

According to a further advantageous embodiment a bottom wall of the receiving tray is manufactured to be at least partly provided with a honeycomb structure. Advantages mentioned above with respect to the corresponding embodiment of the receiving device are correspondingly apply to this method embodiment.

According to a further advantageous embodiment a lower side of the bottom wall of the receiving tray is manufactured to be at least partly provided with a vehicle aerodynamic enhancing structure. Advantages mentioned above with respect to the corresponding embodiment of the receiving device are correspondingly apply to this method embodiment.

According to a further advantageous embodiment the bottom wall of the receiving tray is manufactured to have at least one drain hole. Advantages mentioned above with respect to the corresponding embodiment of the receiving device are correspondingly apply to this method embodiment.

According to a further advantageous embodiment the receiving tray is manufactured so that the bottom wall of the receiving tray is at least partly inclined with respect to an upper access opening of the receiving tray, wherein a rear side wall of the receiving tray has a smaller height than a front side wall of the receiving tray. Advantages mentioned above with respect to the corresponding embodiment of the receiving device are correspondingly accompanied with this method embodiment.

Further advantageous embodiments of the invention are disclosed in the dependent claims and in the following description of the figures. It shows
- Fig. 1 a: schematic top view of an embodiment of an inventive vehicle luggage compartment floor,
- Fig. 2 a: schematic top view of the vehicle luggage compartment floor shown in Fig. 1 accommodating a spare wheel,
- Fig. 3 a: schematic top view of the vehicle luggage compartment floor shown in Fig. 1 accommodating a battery and a luggage suitcase,
- Fig. 4: a schematic top view of the vehicle luggage compartment floor shown in Fig. 1 accommodating a LPG tank,
- Fig. 5: a schematic and perspective bottom view of the receiving device shown in Figs. 1 to 4,
- Fig. 6: a schematic top view of a detail of the receiving device shown in Figs. 1 to 5 and
- Fig. 7: a schematic section view of a further embodiment of an inventive vehicle luggage compartment floor.

In the different figures like parts are provided with same reference signs, so that generally these parts are described only once.

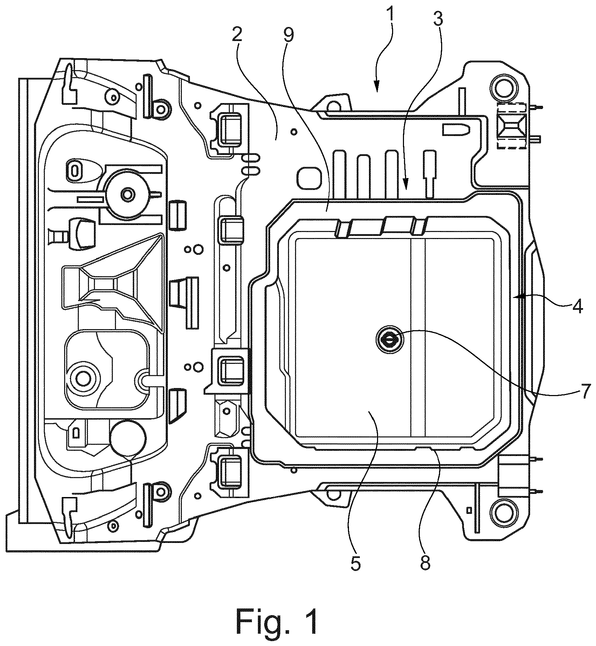

Fig. 1 shows a schematic top view of an embodiment of an inventive vehicle luggage compartment floor 1. The compartment floor 1 comprises a compartment floor element 2 forming a part of a vehicle body (not shown). The compartment floor element 2 comprises an insertion opening (not shown).

Moreover, the compartment floor 1 comprises a receiving device 3 inserted in the insertion opening of the compartment floor element 2. The receiving device 3 comprises a receiving tray 4 formed to be insertable in the insertion opening provided in the compartment floor element 2, such that a bottom wall 5 of the receiving tray 4 forms a part of a vehicle underfloor (not shown). The receiving device 3 is glued to the compartment floor element 2.

The receiving tray 4 is made monolithic from a long fiber reinforced thermoplastic material. At least one reinforcing insert (not shown) may be at least partly embedded in the receiving tray 4, wherein the reinforcing insert comprises at least one fiber mat (not shown). The reinforcing insert may be at least partly arranged at a side wall of the receiving tray 4. The receiving tray 4 is formed to be insertable in the insertion opening in such a way that the side wall of the receiving tray 4 comprising the reinforcing insert is arranged next to a fuel containing component (not shown) of the vehicle when the receiving tray 4 is inserted in the insertion opening as shown in Fig. 1. The receiving tray 4 may contain a flame retardant.

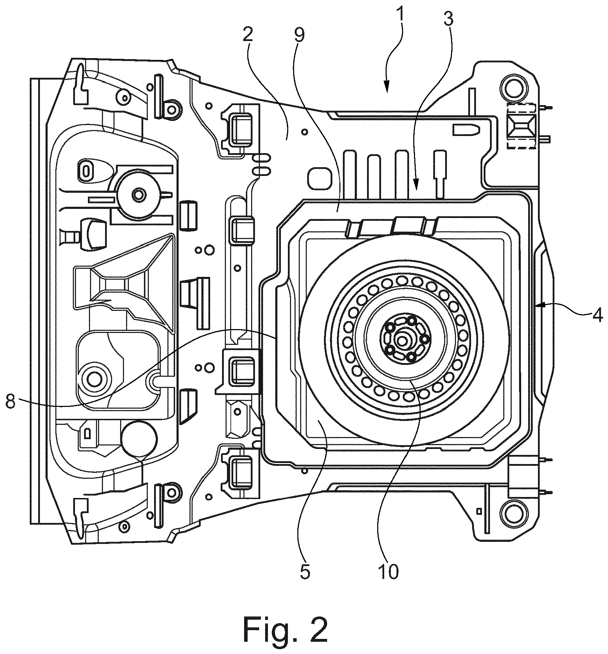

Additionally, the receiving device 3 may comprise at least one reinforcing metal insert (not shown) at least partly embedded in or arranged at the receiving tray 4. The metal insert may be formed to fix a spare wheel (shown in Fig. 2) accommodated at least partly inside the receiving tray 4 to a body structure (not shown) of the vehicle.

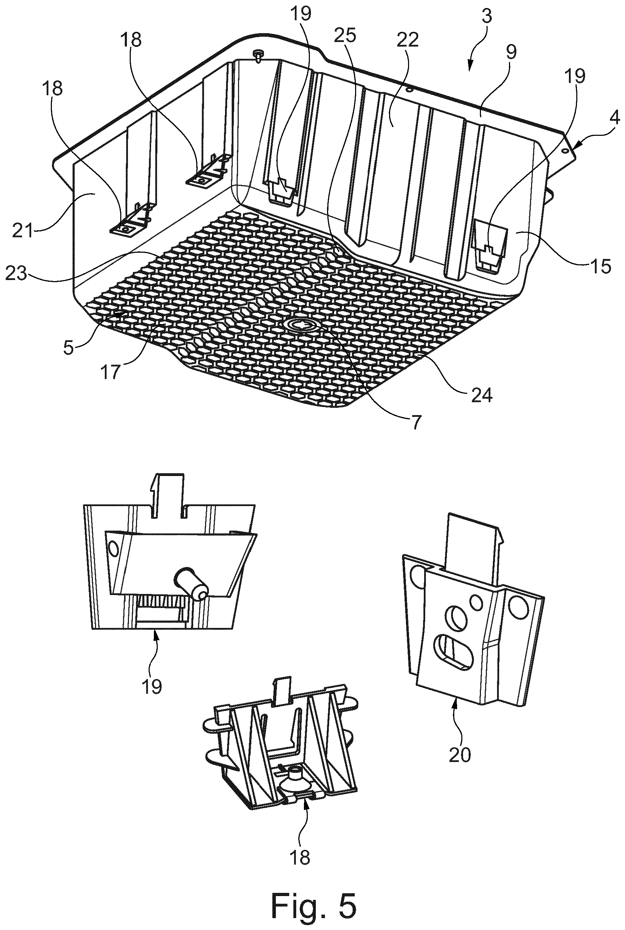

The bottom wall 5 of the receiving tray 4 is at least partly provided with a honeycomb structure (shown in Fig. 5). A lower side of the bottom wall 5 of the receiving tray 4 can be at least partly provided with a vehicle aerodynamic enhancing structure (not shown).

Further, the receiving device 3 comprises fixing units (shown in Fig. 5) for fixing further vehicle component (not shown) to the receiving tray 4. The fixing units are detachably arranged at side walls of the receiving tray 4.

At least one drain hole (not shown) is formed in the bottom wall 5 of the receiving tray 4. The receiving device 3 comprises a closure unit 7 for closing the drain hole. The closure unit 7 is removably arranged at the bottom wall 5 of the receiving tray 4. The closure unit 7 is a drainage valve operable from the inside of the receiving tray 4 shown in Fig. 1.

The bottom wall 5 of the receiving tray 4 may be at least partly inclined with respect to an upper access opening 8 of the receiving tray 4. A rear side wall of the receiving tray 4 may have a smaller height than a front side wall of the receiving tray 4. The receiving tray 4 comprises a circumferentially arranged collar 9 overlapping a part of the compartment floor element 2 and therefore hiding the insert opening of the compartment floor element 2.

Fig. 2 shows a schematic top view of the vehicle luggage compartment floor 1 shown in Fig. 1 accommodating a spare wheel 10. The spare wheel 10 fits snugly in the receiving tray 4.

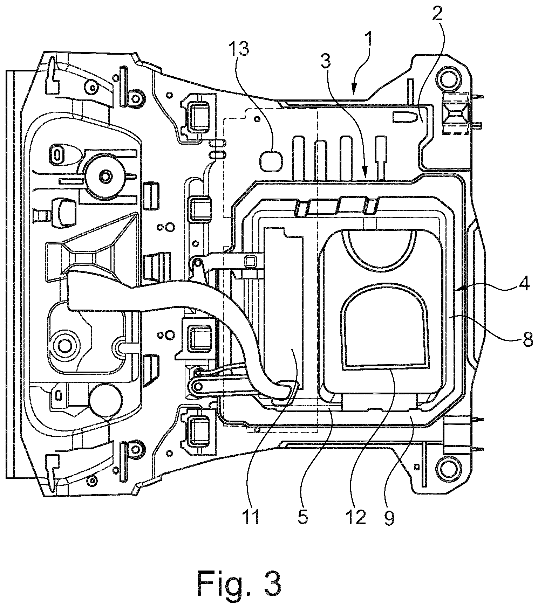

Fig. 3 shows a schematic top view of the vehicle luggage compartment floor 1 shown in Fig. 1 accommodating a battery 11 and a luggage suitcase 12. The receiving device 3 comprises a battery cover 13 shown transparent in Fig. 3. The battery cover 13 covers the battery 11 and is fixed to the receiving tray 4 and/or to the compartment floor element 2.

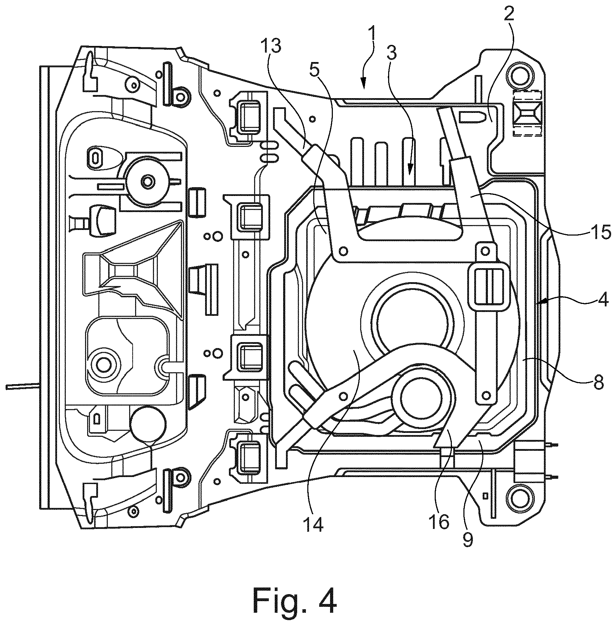

Fig. 4 shows a schematic top view of the vehicle luggage compartment floor 1 shown in Fig. 1 accommodating a LPG tank 14. The LPG tank 14 fits snugly in the receiving tray 4. Additional fixation elements 15 and 16 for fixing the LPG tank 14 are provided.

Fig. 5 shows a schematic and perspective bottom view of the receiving device 3 shown in Figs. 1 to 4. Fig. 5 shows the honeycomb structure 17 of the bottom wall 5 of the receiving tray 4. Further, Fig. 5 shows the fixing units 18, 19 and 20 of the receiving device 3. The fixing units 18 are provided at a rear side wall 21 of the receiving tray 4. The fixing units 19 are provided at both lateral side walls 22 (only one shown in Fig. 5) of the receiving tray 4. Two fixing units 20 are provided at a front side wall (not shown) of the receiving tray 4. The side walls 21, 22 and the front side wall are corrugated to enhance stiffness of the receiving tray 4. The bottom wall 5 of the receiving tray 4 has a rear part 23 and a front part 24, wherein the rear part 23 is connected to the front part 24 by a step 25 so that the rear part 23 is arranged on a higher level than the front part 24.

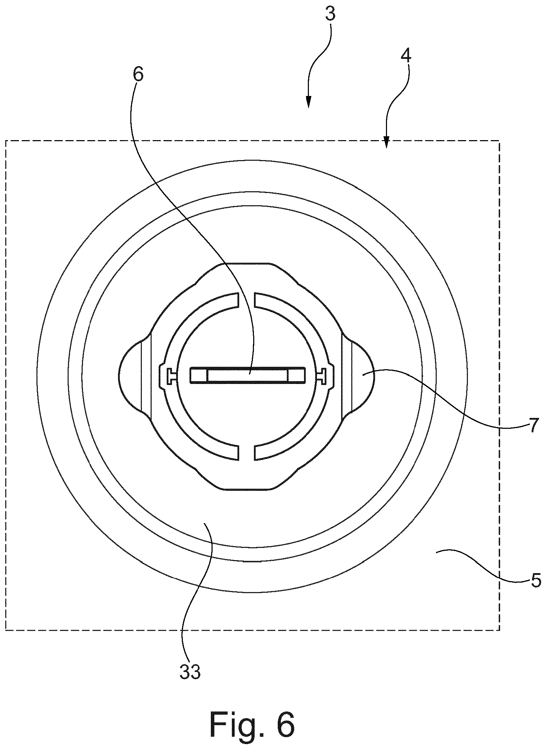

Fig. 6 shows a schematic top view of a detail of the receiving device 3 shown in Figs. 1 to 5. Fig. 6 shows a part of the bottom wall 5 of the receiving tray 4 of the receiving device 3. The bottom wall 5 comprises a circular depression section 33. The closure unit 7 is arranged at the depression section 33. The closure unit 7 comprises an operation recess 6 for accommodating a part of an object to operate the closure unit 7.

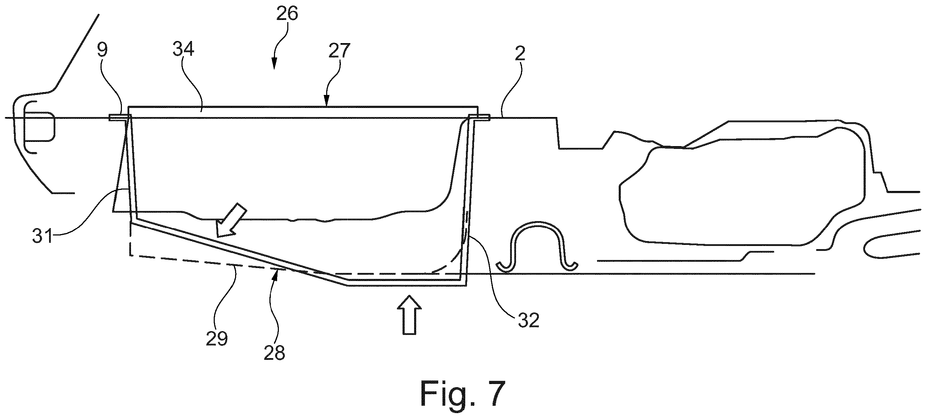

Fig. 7 shows a schematic section view of a further embodiment of an inventive vehicle luggage compartment floor 26. The receiving device 27 of this compartment floor 26 has a receiving tray 28 with a bottom wall 29 being inclined by 4° to 6° with respect to an upper access opening 30 of the receiving tray 28. A rear side wall 31 of the receiving tray 28 has a smaller height than a front side wall 32 of the receiving tray 4. The receiving device 27 comprises al lid 34 covering the receiving tray 28. Incidentally, the vehicle luggage compartment floor 26 can be embodied according to the embodiment shown in Figs. 1 to 6. Therefore, to avoid repetition reference is made to the above description with respect to Figs. 1 to 6.

### Reference signs:

- 1: vehicle luggage compartment floor
- 2: compartment floor element
- 3: receiving device
- 4: receiving tray
- 5: bottom wall of 4
- 6: operation recess of 7
- 7: closure unit
- 8: access opening of 4
- 9: collar of 4
- 10: spare wheel
- 11: battery
- 12: luggage suitcase
- 13: battery cover
- 14: LPG tank
- 15: fixation element
- 16: fixation element
- 17: honeycomb structure
- 18: fixing unit
- 19: fixing unit
- 20: fixing unit
- 21: rear side wall of 4
- 22: lateral side wall of 4
- 23: rear part of 5
- 24: front part of 5
- 25: step between 23 and 24
- 26: vehicle luggage compartment floor
- 27: receiving device
- 28: receiving tray
- 29: bottom wall of 28
- 30: access opening of 28
- 31: rear side wall of 28
- 32: front side wall of 28
- 33: depression section of 5
- 34: lid

## Claims

1. Receiving device (3, 27) for a luggage compartment floor (1, 26) of a vehicle, comprising at least one receiving tray (4, 28) formed to be insertable in an insertion opening provided in the compartment floor (1, 26), such that a bottom wall (5, 29) of the receiving tray (4, 28) forms a part of a vehicle underfloor, and at least one fixing unit (18, 19, 20) for fixing a further vehicle component to the receiving tray (4, 28), wherein the receiving tray (4, 28) is made from a long fiber reinforced thermoplastic material,
**characterized in that**
the fixing unit (18, 19, 20) is detachably arranged at an outer face of a side wall (21, 22, 31, 32) of the receiving tray (4, 28).

2. Receiving device (3, 27) according to claim 1,
**characterized by**
at least one reinforcing insert at least partly embedded in the receiving tray (4, 28), wherein the reinforcing insert comprises at least one fiber mat.

3. Receiving device (3, 27) according to claim 2,
**characterized in that**
the reinforcing insert is at least partly arranged at a side wall (21, 22, 31, 32) of the receiving tray (4, 28), wherein the receiving tray (4, 28) is formed to be insertable in the insertion opening in such a way that the side wall (21, 22, 31, 32) of the receiving tray (4, 28) is arrangeable next to a fuel containing component of the vehicle when the receiving tray (4, 28) is inserted in the insertion opening.

4. Receiving device (3, 27) according to one of the preceding claims,
**characterized by**
at least one reinforcing metal insert at least partly embedded in or arranged at the receiving tray (4, 28), wherein the metal insert is formed to fix a spare wheel (10) accommodated at least partly inside the receiving tray (4, 28) to a body structure of the vehicle.

5. Receiving device (3, 27) according to one of the preceding claims,
**characterized in that**
the bottom wall (5, 29) of the receiving tray (4, 28) is at least partly provided with a honeycomb structure (17).

6. Receiving device (3, 27) according to one of the preceding claims,
**characterized in that**
a lower side of the bottom wall (5, 29) of the receiving tray (4, 28) is at least partly provided with a vehicle aerodynamic enhancing structure.

7. Receiving device (3, 27) according to one of the preceding claims,
**characterized in that**
at least one drain hole is formed in the bottom wall (5, 29) of the receiving tray (4, 28).

8. Receiving device (3, 27) according to claim 7,
**characterized by**
at least one closure unit (7) for closing the drain hole, wherein the closure unit (7) is removably arranged at the bottom wall (5, 29) of the receiving tray (4, 28).

9. Receiving device (3, 27) according to claim 8,
**characterized in that**
the closure unit (7) is a drainage valve operable from the inside of the receiving tray (4, 28).

10. Receiving device (3, 27) according to one of the preceding claims,
**characterized in that**
the receiving tray (4, 28) contains a flame retardant.

11. Receiving device (3, 27) according to one of the preceding claims,
**characterized in that**
the bottom wall (5, 29) of the receiving tray (4, 28) is at least partly inclined with respect to an upper access opening (30) of the receiving tray (4, 28), wherein a rear side wall (21, 31) of the receiving tray (4, 28) has a smaller height than a front side wall (32) of the receiving tray (4, 28).

12. Vehicle luggage compartment floor (1, 26) with at least one compartment floor element (2),
**characterized by**
at least one receiving device (3, 27) according to one of the preceding claims, wherein the compartment floor element (2) comprises at least one insertion opening, and wherein the receiving device (3, 27) is inserted in the insertion opening.

13. Vehicle luggage compartment floor (1, 26) according to claim 12,
**characterized in that**
the receiving device (3, 27) is glued to the compartment floor element (2).

14. Method for manufacturing a receiving device (3, 27) for a luggage compartment floor (1, 26) of a vehicle, wherein at least one receiving tray (4, 28) is formed by compression molding to be insertable in an insertion opening provided in the compartment floor (1, 26), such that a bottom wall (5, 29) of the receiving tray (4, 28) forms a part of a vehicle floor, wherein the receiving tray (4, 28) is manufactured from a long fiber reinforced thermoplastic material,
**characterized in that**
at least one fixing unit (18, 19, 20) for fixing a further vehicle component to the receiving tray (4, 28) is detachably arranged at an outer face of a side wall (21, 22, 31, 32) of the receiving tray (4, 28).

15. Method according to claim 14,
**characterized in that**
at least one reinforcing insert comprising at least one fiber mat is at least partly embedded in the receiving tray (4, 28).

16. Method according to claim 14 or 15,
**characterized in that**
at least one reinforcing metal insert is at least partly embedded in or arranged at the receiving tray (4, 28).

17. Method according to one of the claims 14 to 16,
**characterized in that**
the bottom wall (5, 29) of the receiving tray (4, 28) is manufactured to be at least partly provided with a honeycomb structure (17).

18. Method according to one of the claims 14 to 17,
**characterized in that**
a lower side of the bottom wall (5, 29) of the receiving tray (4, 28) is manufactured to be at least partly provided with a vehicle aerodynamic enhancing structure.

19. Method according to one of the claims 14 to 18,
**characterized in that**
the bottom wall (5, 29) of the receiving tray (4, 28) is manufactured to have at least one drain hole.

20. Method according to one of the claims 14 to 19,
**characterized in that**
the receiving tray (4, 28) is manufactured so that the bottom wall (5, 29) of the receiving tray (4, 28) is at least partly inclined with respect to an upper access opening (30) of the receiving tray (4, 28), wherein a rear side wall (21, 31) of the receiving tray (4, 28) has a smaller height than a front side wall (32) of the receiving tray (4, 28).

## Patentansprüche

1. Aufnahmevorrichtung (3, 27) für einen Kofferraumboden (1, 26) eines Fahrzeugs, umfassend mindestens eine Aufnahmeschale (4, 28), die so ausgebildet ist, dass sie in eine in dem Kofferraumboden (1, 26) vorgesehene Einführöffnung einführbar ist, so dass eine Bodenwand (5, 29) der Aufnahmeschale (4, 28) einen Teil eines Fahrzeugunterbodens bildet, und mindestens eine Befestigungseinheit (18, 19, 20) zur Befestigung einer weiteren Fahrzeugkomponente an der Aufnahmeschale (4, 28), wobei die Aufnahmeschale (4, 28) aus einem langfaserverstärkten, thermoplastischen Material hergestellt ist,
**dadurch gekennzeichnet, dass**
die Befestigungseinheit (18, 19, 20) ablösbar an einer Außenfläche einer Seitenwand (21, 22, 31, 32) der Aufnahmeschale (4, 28) angeordnet ist.

2. Aufnahmevorrichtung (3, 27) nach Anspruch 1,
**gekennzeichnet durch**
mindestens einen Verstärkungseinsatz, der mindestens teilweise in der Aufnahmeschale (4, 28) eingebettet ist, wobei der Verstärkungseinsatz mindestens eine Fasermatte umfasst.

3. Aufnahmevorrichtung (3, 27) nach Anspruch 2,
**dadurch gekennzeichnet, dass**
der Verstärkungseinsatz mindestens teilweise an einer Seitenwand (21, 22, 31, 32) der Aufnahmeschale (4, 28) angeordnet ist, wobei die Aufnahmeschale (4, 28) so ausgebildet ist, dass sie so in die Einführöffnung einführbar ist, dass die Seitenwand (21, 22, 31, 32) der Aufnahmeschale (4, 28) neben einer Kraftstoff enthaltenden Komponente des Fahrzeugs angeordnet werden kann, wenn die Aufnahmeschale (4, 28) in die Einführöffnung eingeführt wird.

4. Aufnahmevorrichtung (3, 27) nach einem der vorhergehenden Ansprüche,
**gekennzeichnet durch**
mindestens einen Metallverstärkungseinsatz, der mindestens teilweise in der Aufnahmeschale (4, 28) eingebettet oder daran angeordnet ist, wobei der Metalleinsatz dazu ausgebildet ist, ein Ersatzrad (10), das mindestens teilweise in der Aufnahmeschale (4, 28) untergebracht ist, an einer Aufbaustruktur des Fahrzeugs zu befestigen.

5. Aufnahmevorrichtung (3, 27) nach einem der vorhergehenden Ansprüche,
**dadurch gekennzeichnet, dass**
die Bodenwand (5, 29) der Aufnahmeschale (4, 28) mindestens teilweise mit einer Wabenstruktur (17) versehen ist.

6. Aufnahmevorrichtung (3, 27) nach einem der vorhergehenden Ansprüche,
**dadurch gekennzeichnet, dass**
eine untere Seite der Bodenwand (5, 29) der Aufnahmeschale (4, 28) mindestens teilweise mit einer die Aerodynamik des Fahrzeugs verbessernden Struktur versehen ist.

7. Aufnahmevorrichtung (3, 27) nach einem der vorhergehenden Ansprüche,
**dadurch gekennzeichnet, dass**
mindestens ein Ablassloch in der Bodenwand (5, 29) der Aufnahmeschale (4, 28) ausgebildet ist.

8. Aufnahmevorrichtung (3, 27) nach Anspruch 7,
**gekennzeichnet durch**
mindestens eine Verschlusseinheit (7) zum Verschließen des Ablasslochs, wobei die Verschlusseinheit (7) entfernbar an der Bodenwand (5, 29) der Aufnahmeschale (4, 28) angeordnet ist.

9. Aufnahmevorrichtung (3, 27) nach Anspruch 8,
**dadurch gekennzeichnet, dass**
die Verschlusseinheit (7) ein Ablassventil ist, das von innerhalb der Aufnahmeschale (4, 28) betätigbar ist.

10. Aufnahmevorrichtung (3, 27) nach einem der vorhergehenden Ansprüche,
**dadurch gekennzeichnet, dass**
die Aufnahmeschale (4, 28) ein Flammschutzmaterial enthält.

11. Aufnahmevorrichtung (3, 27) nach einem der vorhergehenden Ansprüche,
**dadurch gekennzeichnet, dass**
die Bodenwand (5, 29) der Aufnahmeschale (4, 28) mindestens teilweise bezüglich einer oberen Zugangsöffnung (30) der Aufnahmeschale (4, 28) geneigt ist, wobei eine hintere Seitenwand (21, 31) der Aufnahmeschale (4, 28) eine geringere Höhe als eine vordere Seitenwand (32) der Aufnahmeschale (4, 28) hat.

12. Fahrzeugkofferraumboden (1, 26) mit mindestens einem Kofferraumbodenelement (2),
**gekennzeichnet durch**
mindestens eine Aufnahmevorrichtung (3, 27) nach einem der vorhergehenden Ansprüche, wobei das Kofferraumbodenelement (2) mindestens eine Einführöffnung umfasst und wobei die Aufnahmevorrichtung (3, 27) in die Einführöffnung eingeführt wird.

13. Fahrzeugkofferraumboden (1, 26) nach Anspruch 12,
**dadurch gekennzeichnet, dass**
die Aufnahmevorrichtung (3, 27) an dem Kofferraumbodenelement (2) angeklebt ist.

14. Verfahren zur Herstellung einer Aufnahmevorrichtung (3, 27) für einen Kofferraumboden (1, 26) eines Fahrzeugs, wobei mindestens eine Aufnahmeschale (4, 28) so durch Formpressen ausgebildet wird, dass sie in eine in dem Kofferraumboden (1, 26) vorgesehene Einführöffnung einführbar ist, so dass eine Bodenwand (5, 29) der Aufnahmeschale (4, 28) einen Teil eines Fahrzeugbodens bildet, wobei die Aufnahmeschale (4, 28) aus einem langfaserverstärkten, thermoplastischen Material hergestellt ist,
**dadurch gekennzeichnet, dass**
mindestens eine Befestigungseinheit (18, 19, 20) zur Befestigung einer weiteren Fahrzeugkomponente an der Aufnahmeschale (4, 28) ablösbar an einer Außenfläche einer Seitenwand (21, 22, 31, 32) der Aufnahmeschale (4, 28) angeordnet ist.

15. Verfahren nach Anspruch 14,
**dadurch gekennzeichnet, dass**
mindestens ein Verstärkungseinsatz, der mindestens eine Fasermatte umfasst, mindestens teilweise in der Aufnahmeschale (4, 28) eingebettet ist.

16. Verfahren nach Anspruch 14 oder 15,
**dadurch gekennzeichnet, dass**
mindestens ein Metallverstärkungseinsatz mindestens teilweise in der Aufnahmeschale (4, 28) eingebettet oder daran angeordnet ist.

17. Verfahren nach einem der Ansprüche 14 bis 16,
**dadurch gekennzeichnet, dass**
die Bodenwand (5, 29) der Aufnahmeschale (4, 28) so hergestellt wird, dass sie mindestens teilweise mit einer Wabenstruktur (17) versehen ist.

18. Verfahren nach einem der Ansprüche 14 bis 17,
**dadurch gekennzeichnet, dass**
die untere Seite der Bodenwand (5, 29) der Aufnahmeschale (4, 28) so hergestellt wird, dass sie mindestens teilweise mit einer die Aerodynamik des Fahrzeugs verbessernden Struktur versehen ist.

19. Verfahren nach einem der Ansprüche 14 bis 18,
**dadurch gekennzeichnet, dass**
die Bodenwand (5, 29) der Aufnahmeschale (4, 28) so hergestellt wird, dass sie mindestens ein Ablassloch hat.

20. Verfahren nach einem der Ansprüche 14 bis 19,
**dadurch gekennzeichnet, dass**
die Aufnahmeschale (4, 28) so hergestellt wird, dass die Bodenwand (5, 29) der Aufnahmeschale (4, 28) mindestens teilweise bezüglich einer oberen Zugangsöffnung (30) der Aufnahmeschale (4, 28) geneigt ist, wobei eine hintere Seitenwand (21, 31) der Aufnahmeschale (4, 28) eine geringere Höhe als eine vordere Seitenwand (32) der Aufnahmeschale (4, 28) hat.

## Revendications

1. Dispositif de réception (3, 27) d'un plancher de compartiment à bagages (1, 26) d'un véhicule, comprenant au moins un plateau de réception (4, 28) formé pour pouvoir être inséré dans une ouverture d'insertion pratiquée dans le plancher de compartiment (1, 26), de sorte qu'une paroi inférieure (5, 29) du plateau de réception (4, 28) forme une partie d'un plancher de véhicule, et au moins une unité de fixation (18, 19, 20) pour fixer un autre composant de véhicule au plateau de réception (4, 28), le plateau de réception (4, 28) étant en un matériau thermoplastique renforcé par des fibres longues,
**caractérisé en ce que**
l'unité de fixation (18, 19, 20) est disposée de manière détachable sur une face extérieure d'une paroi latérale (21, 22, 31, 32) du plateau de réception (4, 28) .

2. Dispositif de réception (3, 27) selon la revendication 1,
**caractérisé par**
au moins un insert de renforcement au moins partiellement encastré dans le plateau de réception (4, 28), l'insert de renforcement comprenant au moins un matelas de fibres.

3. Dispositif de réception (3, 27) selon la revendication 2,
**caractérisé en ce que**
l'insert de renforcement est au moins partiellement disposé sur une paroi latérale (21, 22, 31, 32) du plateau de réception (4, 28), le plateau de réception (4, 28) étant formé pour pouvoir être inséré dans l'ouverture d'insertion de sorte que la paroi latérale (21, 22, 31, 32) du plateau de réception (4, 28) puisse être disposée à côté d'un composant contenant du carburant du véhicule lorsque le plateau de réception (4, 28) est inséré dans l'ouverture d'insertion.

4. Dispositif de réception (3, 27) selon l'une des revendications précédentes,
**caractérisé par**
au moins un insert métallique de renforcement au moins partiellement encastré dans ou disposé sur le plateau de réception (4, 28), l'insert métallique étant formé pour fixer une roue de secours (10) logée au moins partiellement à l'intérieur du plateau de réception (4, 28) à une structure de carrosserie du véhicule.

5. Dispositif de réception (3, 27) selon l'une des revendications précédentes,
**caractérisé en ce que**
la paroi inférieure (5, 29) du plateau de réception (4, 28) est au moins partiellement pourvue d'une structure en nid d'abeille (17).

6. Dispositif de réception (3, 27) selon l'une des revendications précédentes,
**caractérisé en ce que**
le côté inférieur de la paroi inférieure (5, 29) du plateau de réception (4, 28) est au moins partiellement pourvu d'une structure d'amélioration de l'aérodynamisme du véhicule.

7. Dispositif de réception (3, 27) selon l'une des revendications précédentes,
**caractérisé en ce que**
au moins un trou de drainage est formé dans la paroi inférieure (5, 29) du plateau de réception (4, 28).

8. Dispositif de réception (3, 27) selon la revendication 7,
**caractérisé par**
au moins une unité de fermeture (7) pour fermer le trou de drainage, l'unité de fermeture (7) étant disposée de manière amovible sur la paroi inférieure (5, 29) du plateau de réception (4, 28).

9. Dispositif de réception (3, 27) selon la revendication 8,
**caractérisé en ce que**
l'unité de fermeture (7) est une vanne de drainage pouvant être actionnée depuis l'intérieur du plateau de réception (4, 28).

10. Dispositif de réception (3, 27) selon l'une des revendications précédentes,
**caractérisé en ce que**
le plateau de réception (4, 28) contient un retardateur de flamme.

11. Dispositif de réception (3, 27) selon l'une des revendications précédentes,
**caractérisé en ce que**
la paroi inférieure (5, 29) du plateau de réception (4, 28) est au moins partiellement inclinée par rapport à une ouverture d'accès supérieure (30) du plateau de réception (4, 28), une paroi latérale arrière (21, 31) du plateau de réception (4, 28) ayant une hauteur plus petite qu'une paroi latérale avant (32) du plateau de réception (4, 28).

12. Plancher de compartiment à bagages de véhicule (1, 26) ayant au moins un élément de plancher de compartiment (2),
**caractérisé par**
au moins un dispositif de réception (3, 27) selon l'une des revendications précédentes, l'élément de plancher de compartiment (2) comprenant au moins une ouverture d'insertion, et le dispositif de réception (3, 27) étant inséré dans l'ouverture d'insertion.

13. Plancher de compartiment à bagages de véhicule (1, 26) selon la revendication 12,
**caractérisé en ce que**
le dispositif de réception (3, 27) est collé à l'élément de plancher de compartiment (2).

14. Procédé de fabrication d'un dispositif de réception (3, 27) pour un plancher de compartiment à bagages (1, 26) d'un véhicule, au moins un plateau de réception (4, 28) étant formé par moulage par compression pour pouvoir être inséré dans une ouverture d'insertion pratiquée dans le plancher de compartiment (1, 26), de sorte qu'une paroi inférieure (5, 29) du plateau de réception (4, 28) forme une partie d'un plancher de véhicule, le plateau de réception (4, 28) étant fabriqué à partir d'un matériau thermoplastique renforcé par des fibres longues,
**caractérisé en ce que**
au moins une unité de fixation (18, 19, 20) pour fixer un autre composant de véhicule au plateau de réception (4, 28) est disposée de manière détachable sur une face extérieure d'une paroi latérale (21, 22, 31, 32) du plateau de réception (4, 28).

15. Procédé selon la revendication 14,
**caractérisé en ce que**
au moins un insert de renforcement comprenant au moins un matelas de fibres est au moins partiellement encastré dans le plateau de réception (4, 28).

16. Procédé selon la revendication 14 ou 15,
**caractérisé en ce que**
au moins un insert métallique de renforcement est au moins partiellement encastré dans le plateau de réception (4, 28) ou disposé sur celui-ci.

17. Procédé selon l'une des revendications 14 à 16,
**caractérisé en ce que**
la paroi inférieure (5, 29) du plateau de réception (4, 28) est fabriquée pour être au moins partiellement pourvue d'une structure en nid d'abeille (17).

18. Procédé selon l'une des revendications 14 à 17,
**caractérisé en ce que**
le côté inférieur de la paroi inférieure (5, 29) du plateau de réception (4, 28) est fabriqué pour être au moins partiellement pourvu d'une structure d'amélioration de l'aérodynamisme du véhicule.

19. Procédé selon l'une des revendications 14 à 18,
**caractérisé en ce que**
la paroi inférieure (5, 29) du plateau de réception (4, 28) est fabriquée pour avoir au moins un trou de drainage.

20. Procédé selon l'une des revendications 14 à 19,
**caractérisé en ce que**
le plateau de réception (4, 28) est fabriqué de sorte que la paroi inférieure (5, 29) du plateau de réception (4, 28) soit au moins partiellement inclinée par rapport à une ouverture d'accès supérieure (30) du plateau de réception (4, 28), une paroi latérale arrière (21, 31) du plateau de réception (4, 28) ayant une hauteur plus petite qu'une paroi latérale avant (32) du plateau de réception (4, 28).
